# EUROPEAN PATENT SPECIFICATION

(11) **EP 3 955 356 B1**
(45) Date of publication and mention of the grant of the patent: **29.01.2025**
(21) Application number: 21176012.9
(22) Date of filing: 26.05.2021
(51) Int. Cl.: H01M 10/052, H01M 10/44, H01M 50/213, H01M 50/247, H01M 50/51, H01M 50/516

(54) **BATTERY PACK AND TERMINAL**
BATTERIEPACK UND ENDGERÄT
BLOC-BATTERIE ET TERMINAL

(30) Priority: 11.08.2020 CN 202010803790
(43) Date of publication of application: 16.02.2022
(73) Proprietor: Beijing Xiaomi Mobile Software Co., Ltd., Beijing 100085 (CN)
(72) Inventor: ZHANG, Rui, Beijing, 100085 (CN)
(74) Representative: dompatent von Kreisler Selting Werner - Partnerschaft von Patent- und Rechtsanwälten mbB

(56) References cited:
- WO-A1-2008/133340
- WO-A1-2019/012515
- CN-A- 110 137 405
- CN-U- 204 204 980
- KR-A- 20180 089 723
- US-A1- 2016 172 642

## Description

### TECHNICAL FIELD

The present application relates to the technical field of cell technology and construction, and in particular to a battery pack and a terminal.

### BACKGROUND

With the advent of the 5G era, the power consumption of cell phones and other terminals has increased, and the battery life time has shortened. Therefore, the demand for rapid charging is becoming stronger.

A polymer lithium ion battery is taken as an example. The battery anode material is generally lithium cobalt oxide (LCO) and the cathode material is graphite (C). The charging mode is generally divided into two stages, in the first stage, it is charged with a constant current and a rising voltage (CC), and in the second stage, it is charged with a constant voltage and a dropping current (CV). In order to increase the charging speed, high-current charging of a single cell is mostly used. In this charging manner, on one hand, it is required to reduce the coating weight of the active substance, thereby reducing the energy density of the battery. On the other hand, the high-current charging process will quickly reach the limiting voltage and start to the dropping current charging, the duration of the real high-current charging lasts for a very short time, and the optimization of the full charging time is not obvious.

Due to the limitations of the LCO and graphite material structures, the CV stage voltage of a single cell is limited, and is usually required to be less than 4.48V. Therefore, high-power charging of a single cell with high voltage and low current cannot be realized, thereby limiting the charging speed.

KR20180089723A relates to an auxiliary battery module in which a user can freely adjust the capacity of an auxiliary battery as needed. CN204204980U discloses cell sets, connected in series and juxtaposed in perpendicular directions.

### SUMMARY

The present invention is defined in the independent claims, and the preferable features according to the present invention are defined in the dependent claims. Any embodiment in the present disclosure that does not fall within the scope of protection of the present invention shall be regarded as an example for understanding the present invention but not belonging to the present invention. The present application provides a battery pack and a terminal.

According to a first aspect of the present application, there is provided a battery pack comprising:
a first cell set, comprising at least one first cell;
a second cell set, juxtaposed with the first cell set in a first direction and comprising at least one second cell;
a third cell, juxtaposed with the first cell set and the second cell set in a second direction a third cell, juxtaposed with the first cell set and the second cell set in a second direction, each of a positive pole lug of the third cell and a negative pole lug of the third cell being located at an end of the third cell facing toward the first cell and the second cell;
the first cell set, the third cell, and the second cell set are sequentially connected in series;
the first direction is perpendicular to the second direction;
a positive pole lug of the first cell and a negative pole lug of the first cell are located at different ends of the first cell;
a positive pole lug of the second cell and a negative pole lug of the second cell are located at different ends of the second cell;
the battery pack further comprises: an encapsulation housing in which each of the first cell set, the second cell set and the third cell is located.

Optionally, a positive pole lug of the first cell forms a positive pole lug of the battery pack, and a negative pole lug of the second cell forms a negative pole lug of the battery pack. The positive pole lug of the third cell is connected to a negative pole lug of the first cell set, and the negative pole lug of the third cell is connected to a positive pole lug of the second cell set.

Optionally, multiple first cells are stacked onto one another in the second direction; and/or multiple second cells are stacked onto one another in the second direction.

Optionally, a difference between a sum of a width of the first cell set in the first direction and a width of the second cell set in the first direction, and a width of the third cell in the first direction, is within a predetermined range.

Optionally, multiple first cells are connected in series or in parallel; and/or multiple second cells are connected in series or in parallel.

Optionally, a positive pole lug of the first cell is attached to a center portion of a positive pole piece of the first cell, and a negative pole lug of the first cell is attached to a center portion of a negative pole piece of the first cell.

Optionally, a positive pole lug of the second cell is attached to a center portion of a positive pole piece of the second cell, and a negative pole lug of the second cell is attached to a center portion of a negative pole piece of the second cell.

According to the invention, the battery pack further comprising an encapsulation housing in which each of the first cell set, the second cell set and the third cell is located.

According to a second aspect of the present application, there is provided a terminal comprising:
a housing, having a battery compartment; and
the battery pack according to the first aspect of the present application, the battery pack being located within the battery compartment.

The technical solution provided by the embodiments of the present application comprises the following advantages:
As can be seen from the above, the present application provides multiple cells in a battery pack, and the first cell set, the third cell and the second cell set are sequentially connected in series, thereby increasing a maximum withstand voltage of a single battery pack, and enabling rapid charging of the single battery pack in a high voltage and low current state. Meanwhile, with respect to the configuration in which the positive pole lug of the third cell and the negative pole lug of the third cell are respectively distributed at different ends of the third cell, the present application the positive pole lug of the third cell and the negative pole lug of the third cell are distributed at the same end of the third cell in the present application, thereby reducing the height of at least one of the pole lugs, and further reducing the space occupied by the third cell. The cells are stacked in a manner forming a structure in a shape like an inverted tripod (i.e., the cells are stacked in inverted triangular arrangement), which allows a compact and steady structure while increasing the withstand voltage of the battery pack by connecting more cells in series.

It is should be understood that the foregoing general description and the following detailed description are exemplary and explanatory only and are not restrictive of the application.
the first cell set, the third cell, and the second cell set are sequentially connected in series;
the first direction is perpendicular to the second direction.

Optionally, a positive pole lug of the first cell forms a positive pole lug of the battery pack, and a negative pole lug of the second cell forms a negative pole lug of the battery pack. The positive pole lug of the third cell is connected to a negative pole lug of the first cell set, and the negative pole lug of the third cell is connected to a positive pole lug of the second cell set.

Optionally, multiple first cells are stacked onto one another in the second direction; and/or multiple second cells are stacked onto one another in the second direction.

Optionally, a difference between a sum of a width of the first cell set in the first direction and a width of the second cell set in the first direction, and a width of the third cell in the first direction, is within a predetermined range.

Optionally, each of a positive pole lug of the third cell and a negative pole lug of the third cell is located at an end of the third cell facing toward the first cell and the second cell. A positive pole lug of the first cell and a negative pole lug of the first cell are located at different ends of the first cell. A positive pole lug of the second cell and a negative pole lug of the second cell are located at different ends of the second cell.

Optionally, multiple first cells are connected in series or in parallel; and/or multiple second cells are connected in series or in parallel.

Optionally, a positive pole lug of the first cell is attached to a center portion of a positive pole piece of the first cell, and a negative pole lug of the first cell is attached to a center portion of a negative pole piece of the first cell.

Optionally, a positive pole lug of the second cell is attached to a center portion of a positive pole piece of the second cell, and a negative pole lug of the second cell is attached to a center portion of a negative pole piece of the second cell.

According to the invention, the battery pack further comprising an encapsulation housing in which each of the first cell set, the second cell set and the third cell is located.

According to a second aspect of the present application, there is provided a terminal comprising:
a housing, having a battery compartment; and
the battery pack according to the first aspect of the present application, the battery pack being located within the battery compartment.

The technical solution provided by the embodiments of the present application comprises the following advantages:
As can be seen from the above, the present application provides multiple cells in a battery pack, and the first cell set, the third cell and the second cell set are sequentially connected in series, thereby increasing a maximum withstand voltage of a single battery pack, and enabling rapid charging of the single battery pack in a high voltage and low current state. Meanwhile, with respect to the configuration in which the positive pole lug of the third cell and the negative pole lug of the third cell are respectively distributed at different ends of the third cell, the present application the positive pole lug of the third cell and the negative pole lug of the third cell are distributed at the same end of the third cell in the present application, thereby reducing the height of at least one of the pole lugs, and further reducing the space occupied by the third cell. The cells are stacked in a manner forming a structure in a shape like an inverted tripod (i.e., the cells are stacked in inverted triangular arrangement), which allows a compact and steady structure while increasing the withstand voltage of the battery pack by connecting more cells in series.

It is should be understood that the foregoing general description and the following detailed description are exemplary and explanatory only and are not restrictive of the application.

### BRIEF DESCRIPTION OF THE DRAWINGS

The accompanying drawings, which are incorporated in and constitute a part of this specification, illustrate embodiments consistent with the present application, and together with the description, serve to explain the principles of the application.
FIG. 1 is a schematic view of the cells within a battery pack according to an exemplary embodiment.
FIG. 2 is a schematic view of a current collector of the first cell according to an exemplary embodiment.
FIG. 3 is a schematic view of a current collector of the third cell according to an exemplary embodiment.
FIG. 4 is a schematic view of an aluminum-plastic film according to an exemplary embodiment.
FIG. 5 is a schematic view of a battery pack according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present application. Instead, they are merely examples of apparatuses and methods consistent with aspects related to the present application as recited in the appended claims.

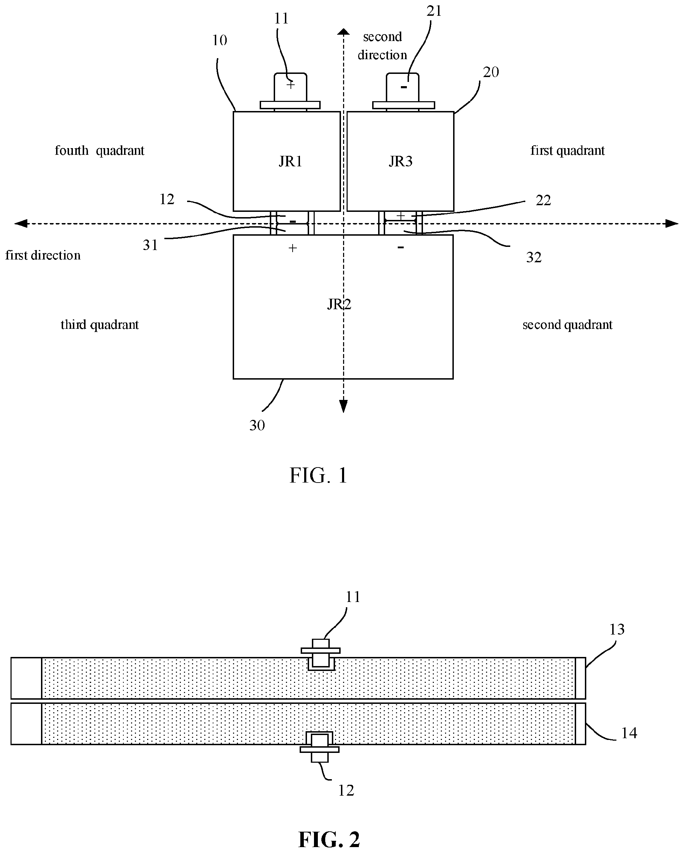

FIG. 1 is a schematic structural diagram of a battery pack comprising: a first cell set comprising at least one first cell 10; a second cell set juxtaposed with the first cell set in a first direction and comprising at least one second cell 20; and a third cell 30 juxtaposed with the first cell set and the second cell set in a second direction. Each of a positive pole lug 31 of the third cell 30 and a negative pole lug 32 of the third cell 30 is located at an end of the third cell 30 facing toward the first cell 10 and the second cell 20. The first cell set, the third cell 30 and the second cell set are sequentially connected in series. The first direction is perpendicular to the second direction.

In the disclosed embodiment, by arranging multiple cells in the battery pack, and by successively connecting the first cell set, the third cell 30, and the second cell set in series, the maximum withstand voltage of the single battery pack is increased, and rapid charging of the single battery pack at a high voltage and low current state can be realized.

In addition, compared to the configuration in which the positive pole lug of the third cell and the negative pole lug of the third cell are distributed at different ends of the third cell, both the positive pole lug of the third cell and the negative pole lug of the third cell are distributed at the same end of the third cell in the present application, thus the height of at least one of the pole lugs is reduced, and the space occupied by the third cell is also reduced. Such arrangement of the first cell set, the second cell set, and the third cell 30 is compact in structure and easy to package. As shown in FIG. 1, multiple cells stacked in a manner forming a structure in a shape like an inverted tripod (i.e., the cells are stacked in inverted triangular arrangement). By stacking the cells in this structure, more cells are connected in series to improve the withstand voltage of the battery pack, while a stable and compact structure is achieved.

By way of example only, the first cell 10, the second cell 20, and the third cell 30 are all polymer lithium ion cells. For example, the anode material of the cell is lithium cobalt oxide (LCO), and the cathode material is graphite (C).
In an example, as shown in FIG. 1, the first cell set comprises a first cell 10, and the second cell set comprises a second cell 20. The first cell set, the second cell set, and the third cell 30 together form a rectangular shape.

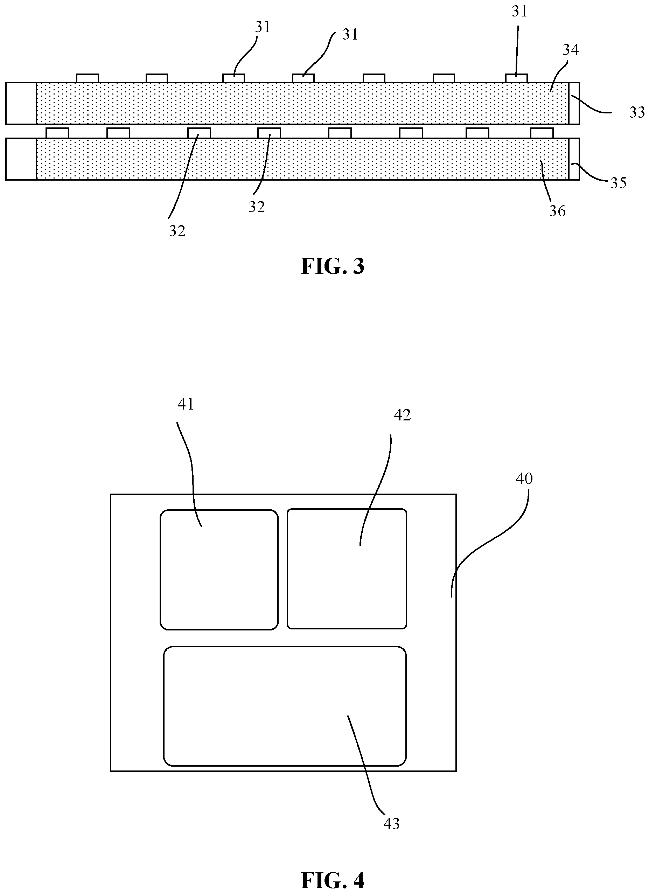

The battery pack further comprises an encapsulation housing. Each of the first cell set, the second cell set, and the third cell 30 is located within the encapsulation housing. By way of example only, the encapsulation housing is an aluminum-plastic film 40. When encapsulating the cells, a corresponding shape can be punched out in the film according to the structure of the cells, and then the cells are placed into the aluminum-plastic film 40 for encapsulation. As shown in FIG. 4, the aluminum-plastic film 40 comprises a first punched pit 41 corresponding to the first cell set, a second punched pit 42 corresponding to the second cell set, and a third punched pit 43 corresponding to the third cell 30. When the cells are placed in the aluminum-plastic film 40, the corresponding cells are aligned with the corresponding punched pits, and then the cells are sealed in the aluminum-plastic film 40.

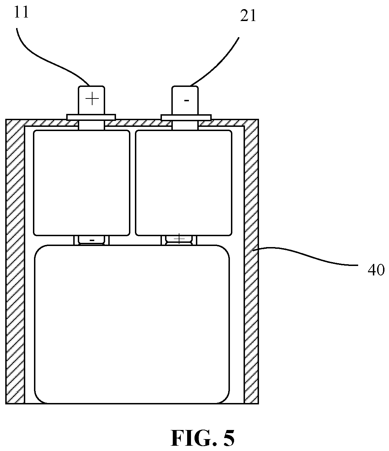

Further, the encapsulation housing is filled with an electrode liquid. The cells (comprising the first cell set, the second cell set, and the third cell 30) are immersed in the electrode liquid, which serves as a carrier for ion transport in the battery pack. The encapsulated battery pack is shown in FIG. 5.

In other alternative embodiments, the battery pack further comprises:
a positive pole lug 11 of the first cell 10 forms a positive pole lug of the battery pack; and a negative pole lug 21 of the second cell 20 forms a negative pole lug of the battery pack; the positive pole lug 31 of the third cell 30 is connected to a negative pole lug 12 of the first cell set, and the negative pole lug 32 of the third cell 30 is connected to a positive pole lug 22 of the second cell set.

As shown in FIG. 1, when the first cell set comprises one first cell 10 and the second cell set comprises one second cell 20, the positive pole lug 11 of the first cell 10 forms the positive pole lug of the battery pack, and the negative pole lug 21 of the second cell 20 forms the negative pole lug of the battery pack. The positive pole lug 31 of the third cell 30 is connected to the negative pole lug 12 of the first cell 10, and the negative pole lug 32 of the third cell 30 is connected to the positive pole lug 22 of the second cell 20.

By way of example only, when the first cell set comprises at least two first cells 10, the negative pole lug 12 of one of the first cells 10 are connected to the positive pole lug 11 of an adjacent first cell 10, and the at least two first cells 10 may be connected in series in an end-to-end manner. When the second cell set comprises at least two second cells 20, the at least two second cells 20 may also be connected in series in the same manner, i.e., connected in series in an end-to-end manner. At this time, the positive pole lug 11 of a first one in the first cell set serves as the positive pole lug of the battery pack; the negative pole lug 12 of the last one in the first cell set after the series connection is connected to the positive pole lug 31 of the third cell; the negative pole lug 21 of the first one in the second cell set serves as a negative pole lug of the battery pack; the positive pole lug 22 of the last one in the second cell set after the series connection is connected to the negative pole lug 32 of the third cell.

In other alternative embodiments, multiple first cells 10 are stacked onto one another in a second direction; and/or multiple second cells 20 are stacked onto one another in a second direction.

When manufacturing the battery pack, the multiple first cells 10 and the multiple second cells 20 may be arranged in another manner according to actual requirements.

In other alternative embodiments, a difference between a sum of a width of the first cell set in the first direction and a width of the second cell set in the first direction, and a width of the third cell 30 in the first direction, is within a predetermined range.

When the multiple first cells 10 are stacked onto one another in the second direction, the width of the first cell set in the first direction is equal to the width of a single first cell 10 in the first direction. Similarly, when the multiple second cells 20 are stacked onto one another in the second direction, the width of the second cell set in the first direction is equal to the width of the single second cell 20 in the first direction. In the case that the predetermined range is in the vicinity of 0, the closer the predetermined range is to 0, the closer the width of the third cell 30 in the first direction is to the sum of the width of the first cell 10 in the first direction and the width of the second cell 20 in the first direction, and the more regular the shape of the combination of the multiple cells in the battery pack, the easier it is to encapsulated.

In other alternative embodiments, the positive pole lug of the first cell 10 and the negative pole lug of the first cell 10 are located at different ends of the first cell 10;
the positive pole lug of the second cell 20 and the negative pole lug of the second cell 20 are located at different ends of the second cell 20.

By way of example only, as shown in FIG. 1, the different ends may be opposite ends.

By way of example only, as shown in FIG. 1, when the first cell set and the third cell 30 are connected in series, the positive lug 31 of the third cell 30 may be aligned with the negative lug 12 of one of the first cells 10. When the second cell and the third cell 30 are connected in series, the negative lug 32 of the third cell 30 may be aligned with the positive lug 22 of one of the second cells 20. When connecting the lugs in series, the lugs at the connection position of the cells are closer to one another, which facilitates the assembly of the cells, and which further reduces the overall space occupied by the first cell set, the second cell set and the third cell 30 after the stacked connections.

Further, as shown in FIG. 2, the positive pole lug 11 of the first cell 10 is attached to a positive pole piece 13 of the first cell 10, and the negative pole lug 12 of the first cell 10 is attached to a negative pole piece 14 of the first cell 10. The positive pole lug of the second cell 20 is attached to a positive pole piece of the second cell, and the negative pole lug of the second cell 20 is attached to a negative pole piece of the second cell 20.

The structure of the second cell 20 may be the same as that of the first cell 10. The manner of the attaching comprises, but is not limited to, welding. When the pole lug and pole piece are set in this manner and the pole piece is winded, the positive pole lug and negative pole lug can be distributed at different ends of the first cell 10.

In other alternative embodiments, the positive pole lug 11 of the first cell 10 is attached to a center portion of the positive pole piece 13 of the first cell 10 and the negative pole lug 12 of the first cell 10 is attached to a center portion of the negative pole piece 14 of the first cell 10.

The position of the lugs will affect the impedance of the cell. The lugs attached to a center portion of the pole piece are more conducive to obtain lower impedance and to ensure the capacity of the cell, relative to the lugs attached to the other positions such as the edge of the pole piece.

In other alternative embodiments, the positive pole lug of the second cell 20 is attached to a center portion of the positive pole piece of the second cell 20 and the negative pole lug of the second cell 20 is attached to the center portion of the negative pole piece of the second cell 20.

Likewise, the lugs attached to the center portion of the pole piece are more conducive to obtain lower impedance and ensure the capacity of the cell, relative to the lugs attached to the other positions such as the edge of the pole piece.

In an example, the lug of the first cell 10 and the lug of the second cell 20 are both located in the center portion of the respective corresponding pole pieces. The AC internal resistance of each cell is ensured to be within 5mQ, and the phenomenon of the battery pack fever is reduced while the fast charging effect of the battery pack is ensured.

In other alternative embodiments, the positive pole piece of the third cell 30 comprises a positive pole substrate 33 and a positive pole coating 34. Herein, an edge of the positive pole substrate 33 protrudes upwardly to form the positive pole lugs 31 of the third cell 30. The positive pole coating 34 is located in a region of the positive pole substrate 33 that does not comprise the positive pole lugs 31 of the third cell 30. The negative pole piece of the third cell 30 comprises a negative pole substrate 35 and a negative pole coating 36. An edge of the negative pole substrate 35 protrudes upwardly to form negative pole lugs 32 of the third cell 30. The negative pole coating 36 is located in a region of the negative pole substrate 35 that does not comprise the negative pole lugs 32 of the third cell 30.

As shown in FIG. 3, in an actual application, the positive pole lugs 31, which are integrated with the positive pole substrate 33, or the negative pole lugs 32, which are integrated with the negative pole substrate 35, can be formed by cutting. When the negative pole piece of the third cell 30 is attached to the positive pole piece of the third cell 30, the positive pole lug of the third cell 30 and the negative pole lug of the third cell 30 are oriented in the same direction, and the positive pole lugs of the third cell 30 are spaced apart from the negative pole lugs of the third cell 30 in the first direction. When the pole lugs and the pole pieces are provided in this manner and the cells are formed by winding, both of the positive pole lugs 31 and the negative pole lugs 32 of the third cell 30 are located at the same end.

In other alternative embodiments, the multiple first cells 10 are connected in series or in parallel; and/or multiple second cells 20 are connected in series or in parallel.

Specifically, if the multiple first cells 10 are connected in series to form a first cell set and the multiple second cells 20 are connected in series to form a second cell set, the charging voltage can be further increased after the first cell set, the third cell, and the second cell set are connected in series. If the multiple first cells 10 are connected in parallel to form a first cell set and the multiple second cells 20 are connected in parallel to form a second cell set, the charging current can be increased after the first cell set, the third cell, and the second cell set are connected in series. However, in this case, the charging current of the battery pack does not exceed minimum value of the charging current of the first cell set, the charging current of the third cell and the charging current of the second cell set, so as to ensure the safety of charging the battery pack.

In the present embodiment, when the first cell set comprises at least two first cells 10, the at least two first cells 10 may be connected in series, or may be connected in parallel, or some of the first cells may be connected in series and then connected in series with the rest. Similarly, when the second cell set comprises at least two second cells 20, the at least two second cells 20 may be connected in series, or may be connected in parallel, or some of the second cells may be connected in series and then connected in series with the rest.

In an example, as shown in FIG. 1, according to size and capacity requirements of the battery pack, the pack length and width are divided into two equal parts, and the axes are established with the center of the pack. The bare cell JR1 (i.e., the first cell set) having pole lugs at head and tail ends thereof and the bare cell JR3 (i.e., the second cell set) having pole lugs at head and tail ends thereof are placed in first and fourth quadrants respectively. The bare cell JR2 (i.e., the third cell 30) which has a positive pole lug and a negative pole lug at a head end thereof is placed in second and third quadrants. So that the cells are stacked to form a shape like an inverted tripod (i.e., the cells are stacked in inverted triangular arrangement), and AC internal resistance of the bare cells is required to be within 5mQ. As shown in FIG. 2, the first cell 10 and the second cell 20, which have pole lugs at head and tail ends thereof, adopt the lug-centered winding structure, that is, the positive pole lug and the negative pole lug are welded to the center portion of the pole pieces, and then are wound to form the first cell 10 and the second cell 20. As shown in FIG. 3, the third cell 30, of which the positive pole lug and the negative lug are both located at the head end, adopts a multi-lug structure. That is, a base material (i.e., a current collector) is cut at intervals, and protruding portions formed after the cutting form the lugs, and then are wound to form the bare cell. The bare cell JR1 in the fourth quadrant is placed in such a way that the positive pole lug faces upwards and the negative pole lug faces downwards, and the negative pole lug of JR1 is welded to the positive pole lug of the bare cell JR2 in the second quadrant and third quadrant by ultrasonic welding. During encapsulation, the negative pole lug of the bare cell JR3 in the first quadrant is oriented upwardly and the positive pole lug is oriented downwardly, the positive pole lug of JR3 is welded to the negative lug of bare cell JR2 in the second and third quadrant by ultrasonic welding, so that a single cell structure with internal series connection is formed. Corresponding pits are punched out in the aluminum-plastic film 40 according to the structure of the cells, and then the cells are placed into the aluminum-plastic film 40 for encapsulation. The final battery pack can meet that the single battery pack achieves the fast charging demand of 50W and above output power at high voltage of 5~20V and low current of less than 5A.

A terminal according to an embodiment of the present application comprises: a housing, having a battery compartment; and the battery pack of any one of the above embodiments, located in the battery compartment.

The terminal comprises, but is not limited to, a product having a battery pack such as a mobile phone, a tablet, a notebook computer, a desktop computer, or a wearable device.

An embodiment of the present application further provides a method of manufacturing a battery pack, comprising the following:
At S101, a first cell set and a second cell set are placed to be juxtaposed with one another in a first direction, the first cell set comprises at least one first cell 10 and the second cell set comprises at least one second cell 20.
At S102, the third cell 30 is placed to be juxtaposed with the first cell set and the second cell set in a second direction.
At S103, the first cell set, the third cell 30 and the second cell set are sequentially connected in series.

In the present application, the manufacturing method refers to a method of manufacturing the battery pack according to any one of the above embodiments.

Multiple cells are arranged in the battery pack, and the first cell set, the third cell and the second cell set are sequentially connected in series, so that the maximum withstand voltage of the single battery pack is increased, and rapid charging of the single battery pack at a high voltage and low current state can be realized. At the same time, multiple cells stacked in a manner forming a structure in a shape like an inverted tripod (i.e., the cells are stacked in inverted triangular arrangement). By stacking the cells in this structure, more cells are connected in series to improve the withstand voltage of the battery pack, while a stable and compact structure is achieved.

In other alternative embodiments, the step of juxtaposing the third cell 30 with the first cell set and the second cell set in a second direction comprises:
aligning the positive pole lug of the third cell 30 with the negative pole lug of the first cell 10; and
aligning the negative pole lug of the third cell 30 with the positive pole lug of the second cell 20.

In actual applications, when the first cell set is connected in series to the third cell 30, the negative lug of the third cell 30 may be aligned with the positive pole lug of one of the first cells 10. When the second cell set is connected in series to the third cell 30, the positive pole lug of the third cell 30 may be aligned with the negative pole lug of one of the second cells 20. When connecting the lugs in series, the lugs at the connection position of the cells are closer to one another, which facilitates the assembly of the cells.

In other alternative embodiments, the step of sequentially connecting the first cell set, the third cell 30, and the second cell set in series, comprising:
welding a positive pole lug of the third cell 30 to a negative pole lug of the first cell 10; and
welding a negative pole lug of the third cell 30 to a positive pole lug of the second cell 20.

By way of example only, the welding is ultrasonic welding.

In other alternative embodiments, the method of manufacturing a battery pack further comprises:
stacking multiple first cells 10 onto one another in the second direction to form the first cell set;
stacking multiple second cells 20 onto one another in the second direction to form the second cell set.

Alternatively, the multiple first cells 10 and the multiple second cells 20 may be arranged in other manners according to actual requirements when performing the battery pack design.

Further, a difference between a sum of a width of the first cell set in the first direction and a width of the second cell set in the first direction, and a width of the third cell 30 in the first direction, is within a predetermined range.

When the multiple of first cells 10 are stacked onto one another in the second direction, the width of the first cell set in the first direction is equal to the width of the single first cell 10 in the first direction. Similarly, when the multiple second cells 20 are stacked onto one another in the second direction, the width of the second cell set in the first direction is equal to the width of the single second cell 20 in the first direction. In the case that the predetermined range is in the vicinity of 0, the closer the preset range is to 0, the closer the width of the third cell 30 in the first direction is to the sum of the width of the first cell 10 in the first direction and the width of the second cell 20 in the first direction, and the more regular the shape of the combination of the cells in the battery pack, the easier it is to encapsulate.

In other alternative embodiments, a method for manufacturing a battery pack further comprises:
connecting multiple first cells 10 in series or in parallel to one another; and/or
connecting multiple second cells 20 in series or in parallel to one another.

In the present embodiment, when the first cell set comprises at least two first cells 10, the at least two first cells 10 may be connected in series, or may be connected in parallel, or some of the first cells may be connected in series and then connected in series with the rest. Similarly, when the second battery set comprises at least two second cells 20, the at least two second cells 20 may be connected in series, or may be connected in parallel, or some of the second cells may be connected in series and then connected in series with the rest.

## Claims

1. A battery pack, the battery pack comprises
a first cell set, comprising at least one first cell (10);
a second cell set, juxtaposed with the first cell set in a first direction and comprising at least one second cell (20);
a third cell (30), juxtaposed with the first cell set and the second cell set in a second direction, each of a positive pole lug (31) of the third cell (30) and a negative pole lug (32) of the third cell (30) being located at an end of the third cell (30) facing toward the first cell (10) and the second cell (20);
the first cell set, the third cell (30) and the second cell set are sequentially connected in series;
the first direction is perpendicular to the second direction;
**characterized in that**
a positive pole lug (11) of the first cell (10) and a negative pole lug (12) of the first cell (10) are located at different ends of the first cell (10);
a positive pole lug (22) of the second cell (20) and a negative pole lug (21) of the second cell (20) are located at different ends of the second cell (20);
the battery pack further comprises:
an encapsulation housing in which each of the first cell set, the second cell set and the third cell (30) is located.

2. The battery pack of claim 1, wherein
the positive pole lug (11) of the first cell (10) forms a positive pole lug of the battery pack, and the negative pole lug (21) of the second cell (20) forms a negative pole lug of the battery pack;
the positive pole lug (31) of the third cell (30) is connected to a negative pole lug of the first cell set, and the negative pole lug (32) of the third cell (30) is connected to a positive pole lug of the second cell set.

3. The battery pack of claim 1 or 2, wherein
a plurality of the first cells (10) are stacked onto one another in the second direction; and/or
a plurality of the second cells (20) are stacked onto one another in the second direction.

4. The battery pack of any one of the preceding claims, wherein
a difference between a sum of a width of the first cell set in the first direction and a width of the second cell set in the first direction, and a width of the third cell (30) in the first direction, is within a predetermined range.

5. The battery pack of any one of the preceding claims, wherein
a plurality of the first cells (10) are connected in series or in parallel; and/or
a plurality of the second cells (20) are connected in series or in parallel.

6. The battery pack of any one of the preceding claims, wherein
the positive pole lug (11) of the first cell (10) is attached to a center portion of a positive pole piece (13) of the first cell (10), and the negative pole lug (12) of the first cell (10) is attached to a center portion of a negative pole piece (14) of the first cell (10).

7. The battery pack of any one of the preceding claims, wherein
the positive pole lug (22) of the second cell (20) is attached to a center portion of a positive pole piece of the second cell (20), and the negative pole lug (21) of the second cell (20) is attached to a center portion of a negative pole piece of the second cell (20).

8. A terminal comprising:
a housing, having a battery compartment; and
the battery pack of any one of claims 1 to 7, the battery pack being located within the battery compartment.

## Patentansprüche

1. Batteriepack, wobei das Batteriepack aufweist:
einen ersten Zellensatz, der mindestens eine erste Zelle (10) aufweist;
einen zweiten Zellensatz, der in einer ersten Richtung dem ersten Zellensatz gegenübergestellt ist und mindestens eine zweite Zelle (20) aufweist;
eine dritte Zelle (30), die in einer zweiten Richtung dem ersten Zellensatz und dem zweiten Zellensatz gegenübergestellt ist, wobei sich ein Pluspolvorsprung (31) der dritten Zelle (30) und ein Minuspolvorsprung (32) der dritten Zelle (30) jeweils an einem Ende der dritten Zelle (30) befinden, das der ersten Zelle (10) und der zweiten Zelle (20) zugewandt ist;
wobei der erste Zellensatz, die dritte Zelle (30) und der zweite Zellensatz nacheinander in Reihe geschaltet sind;
wobei die erste Richtung senkrecht zur zweiten Richtung ist;
**dadurch gekennzeichnet, dass**
sich ein Pluspolvorsprung (11) der ersten Zelle (10) und ein Minuspolvorsprung (12) der ersten Zelle (10) an verschiedenen Enden der ersten Zelle (10) befinden;
sich ein Pluspolvorsprung (22) der zweiten Zelle (20) und ein Minuspolvorsprung (21) der zweiten Zelle (20) an verschiedenen Enden der zweiten Zelle (20) befinden;
das Batteriepack ferner aufweist:
ein Einkapselungsgehäuse, in dem sich jeweils der erste Zellensatz, der zweite Zellensatz und die dritte Zelle (30) befinden.

2. Batteriepack nach Anspruch 1, wobei
der Pluspolvorsprung (11) der ersten Zelle (10) einen Pluspolvorsprung des Batteriepacks bildet, und der Minuspolvorsprung (21) der zweiten Zelle (20) einen Minuspolvorsprung des Batteriepacks bildet;
der Pluspolvorsprung (31) der dritten Zelle (30) mit einem Minuspolvorsprung des ersten Zellensatzes verbunden ist, und der Minuspolvorsprung (32) der dritten Zelle (30) mit einem Pluspolvorsprung des zweiten Zellensatzes verbunden ist.

3. Batteriepack nach Anspruch 1 oder 2, wobei
eine Vielzahl von ersten Zellen (10) in der zweiten Richtung übereinandergestapelt sind; und/oder
eine Vielzahl von zweiten Zellen (20) in der zweiten Richtung übereinandergestapelt sind.

4. Batteriepack nach einem der vorstehenden Ansprüche, wobei eine Differenz zwischen einer Summe aus einer Breite des ersten Zellensatzes in der ersten Richtung und einer Breite des zweiten Zellensatzes in der ersten Richtung und einer Breite der dritten Zelle (30) in der ersten Richtung innerhalb eines vorbestimmten Bereichs liegt.

5. Batteriepack nach einem der vorstehenden Ansprüche, wobei
eine Vielzahl der ersten Zellen (10) in Reihe geschaltet oder parallel geschaltet sind; und/oder
eine Vielzahl der zweiten Zellen (20) in Reihe geschaltet oder parallel geschaltet sind.

6. Batteriepack nach einem der vorstehenden Ansprüche, wobei der Pluspolvorsprung (11) der ersten Zelle (10) an einem Mittelteil eines Pluspolstücks (13) der ersten Zelle (10) befestigt ist, und der Minuspolvorsprung (12) der ersten Zelle (10) an einem Mittelteil eines Minuspolstücks (14) der ersten Zelle (10) befestigt ist.

7. Batteriepack nach einem der vorstehenden Ansprüche, wobei der Pluspolvorsprung (22) der zweiten Zelle (20) an einem Mittelteil eines Pluspolstücks der zweiten Zelle (20) befestigt ist, und der Minuspolvorsprung (21) der zweiten Zelle (20) an einem Mittelteil eines Minuspolstücks der zweiten Zelle (20) befestigt ist.

8. Endgerät, das aufweist:
ein Gehäuse mit einem Batteriefach; und
das Batteriepack nach einem der Ansprüche 1 bis 7, wobei sich das Batteriepack in dem Batteriefach befindet.

## Revendications

1. Bloc-batterie, le bloc-batterie comprend
un premier ensemble de cellules, comprenant au moins une première cellule (10) ;
un second ensemble de cellules, juxtaposé au premier ensemble de cellules dans une première direction et comprenant au moins une deuxième cellule (20) ;
une troisième cellule (30), juxtaposée au premier ensemble de cellules et au second ensemble de cellules dans une seconde direction, chacune d'une cosse de pôle positif (31) de la troisième cellule (30) et d'une cosse de pôle négatif (32) de la troisième cellule (30) étant située au niveau d'une extrémité de la troisième cellule (30) orientée vers la première cellule (10) et la deuxième cellule (20) ;
le premier ensemble de cellules, la troisième cellule (30) et le second ensemble de cellules sont connectés de manière séquentielle en série ;
la première direction est perpendiculaire à la seconde direction ;
**caractérisé en ce que**
une cosse de pôle positif (11) de la première cellule (10) et une cosse de pôle négatif (12) de la première cellule (10) sont situées au niveau de différentes extrémités de la première cellule (10) ;
une cosse de pôle positif (22) de la deuxième cellule (20) et une cosse de pôle négatif (21) de la deuxième cellule (20) sont situées au niveau de différentes extrémités de la deuxième cellule (20) ;
le bloc-batterie comprend en outre :
un boîtier d'encapsulation dans lequel sont situés chacun du premier ensemble de cellules, du second ensemble de cellules et de la troisième cellule (30).

2. Bloc-batterie selon la revendication 1, dans lequel
la cosse de pôle positif (11) de la première cellule (10) forme une cosse de pôle positif du bloc-batterie, et la cosse de pôle négatif (21) de la deuxième cellule (20) forme une cosse de pôle négatif du bloc-batterie ;
la cosse de pôle positif (31) de la troisième cellule (30) est connectée à une cosse de pôle négatif du premier ensemble de cellules, et la cosse de pôle négatif (32) de la troisième cellule (30) est connectée à une cosse de pôle positif du second ensemble de cellules.

3. Bloc-batterie selon la revendication 1 ou 2, dans lequel
une pluralité de premières cellules (10) sont empilées les unes sur les autres dans la seconde direction ; et/ou
une pluralité de deuxièmes cellules (20) sont empilées les unes sur les autres dans la seconde direction.

4. Bloc-batterie selon l'une quelconque des revendications précédentes, dans lequel
une différence entre une somme d'une largeur du premier ensemble de cellules dans la première direction et d'une largeur d'un second ensemble de cellules dans la première direction et d'une largeur de la troisième cellule (30) dans la première direction se situe dans une plage prédéterminée.

5. Bloc-batterie selon l'une quelconque des revendications précédentes, dans lequel
une pluralité de premières cellules (10) sont connectées en série ou en parallèle ; et/ou
une pluralité de deuxièmes cellules (20) sont connectées en série ou en parallèle.

6. Bloc-batterie selon l'une quelconque des revendications précédentes, dans lequel
la cosse de pôle positif (11) de la première cellule (10) est fixée à une partie centrale d'une pièce de pôle positif (13) de la première cellule (10), et la cosse de pôle négatif (12) de la première cellule (10) est fixée à une partie centrale d'une pièce de pôle négatif (14) de la première cellule (10).

7. Bloc-batterie selon l'une quelconque des revendications précédentes, dans lequel
la cosse de pôle positif (22) de la deuxième cellule (20) est fixée à une partie centrale d'une pièce de pôle positif de la deuxième cellule (20), et la cosse de pôle négatif (21) de la deuxième cellule (20) est fixée à une partie centrale d'une pièce de pôle négatif de la deuxième cellule (20).

8. Terminal comprenant :
un boîtier ayant un compartiment à batterie ; et
le bloc-batterie selon l'une quelconque des revendications 1 à 7, le bloc-batterie étant situé à l'intérieur du compartiment à batterie.
